# EUROPEAN PATENT SPECIFICATION

(11) **EP 0 339 874 B1**
(45) Date of publication and mention of the grant of the patent: **12.07.1995**
(21) Application number: 89303947.9
(22) Date of filing: 20.04.1989
(51) Int. Cl.: G11B 19/04, G11B 5/455

(54) **Thin film head read recovery**
Dünnfilmkopf-Erholung
Réparation d'une tête à films minces

(30) Priority: 29.04.1988 US 188047
(43) Date of publication of application: 02.11.1989
(73) Proprietor: QUANTUM CORPORATION, Milpitas California 95035 (US)
(72) Inventor: Supino, Louis, Jr., Colorado Springs Colorado 80908 (US); Rinaldis, Joseph M., Colorado Springs Colorado 80918 (US)
(74) Representative: Goodman, Christopher

(56) References cited:
- EP-A- 0 137 676
- DE-A- 3 910 859
- JP-A- 1 082 301
- IEEE TRANSACTIONS ON MAGNETICS vol. MAG19, no. 5, September 1983, NEW YORK N.Y.,USA pages 1737 - 1739; R.SIMMONS ET AL.: 'Design and Peak Shift Characterization of a magnetoresitive head thin film media system' '
- PATENT ABSTRACTS OF JAPAN vol. 8, no. 165 (P-291)(1602) 31 July 1984 & JP-A-060 722 (FUJITSU K.K.) 5 April 1984
- IBM TECHNICAL DISCLOSURE BULLETIN vol. 13, no. 1, June1970, ARMONK; N.Y., USA page 202; F.K.AllEN ET AL.: 'Reduction of read error rate in magnetic recording systems'
- PATENT ABSTRACTS OF JAPAN vol. 7, no. 64 (P-183)(1209) 17 March 1983 & JP-A-57 208 615 ( FUJITSU K.K. ) 21 December 1982
- PATENT ABSTRACTS OF JAPAN vol. 14, no. 21 (P-990)(3964) 17 January 1990 & JP-A-01 263 903 ( HITACHI LTD ) 20 October 1989

## Description

### Background of the Invention

This invention relates to thin film magnetic read/write heads.

When a write current is applied to a typical thin-film read/write head, the resulting write field causes the full width of the tip of each pole of the head to be spanned by a single magnetic domain. When the write current is removed, so-called closure domains and central domains are reformed within the head in a configuration that minimizes the sum of the magnetostatic, anisotropic, and exchange energy of the magnetic particles in the head. The precise configuration of the reformed domains will depend on, for example, stress from the alumina layers in the vicinity of the permalloy material that forms the head, the iron/nickel ratio in the permalloy composition, defects in the permalloy material, and the profile of the write current as it is reduced to zero. Thus, the domain configuration after a write operation may differ slightly from the domain configuration prior to the write operation

When the head is used to read data on a track of a magnetic disk, the field generated by the data element being read from the disk is passed along the pole of the head by slight rotation of the magnetizations in the central domains and small movements of the domain walls, but without altering the general domain configuration. The effectiveness of a read operation will depend on the particular domain configuration that resulted from the most recent write operation.

Viewed at a less microscopic level, the domain configuration determines the head permeability and hence the efficiency with which the head can read data; and the most recent write operation determines the domain configuration. In some cases, the reading efficiency of a given domain configuration may be so low as to produce multiple symbol and uncorrectable errors and an inability to read header information.

In IBM Technical Disclosure Bulletin, Vol. 13, No. 1, June 1970, p.202 there is described a method for the reduction of read error rates in magnetic recording systems. The method describes the application of a DC bias current to a read/write head, after a read operation ("playback") in which an error has been detected.

In EP-0137676 there is described a method of obtaining an invariable output characteristic of a magnetic head by, prior to any playback operation, applying a decaying alternating current superimposed on the bias current which provides the bias magnetic field to the head's magneto-resistive element.

### Summary of the Invention

A method and an apparatus, according to the invention, are defined in claims 1 and 9, respectively.

Preferred embodiments of the invention include the following features. The write operation is performed in a separate region of the medium from the region where data is stored. The existence of errors in data read from the medium is detected as an indication of whether the read operation was performed acceptably. After the write operation, the head performs the first (read) operation again. The error detection, writing, and reading steps may be repeated more than once, if necessary, until the head is able to perform the read operation acceptably.

The invention takes advantage of the fact that a write operation is capable of reconfiguring the domains and thus returninc the head to a condition in which it can read from the disk. The procedure reduces the number of uncorrectable read errors, and may be included as one of several techniques used in a disk drive to recover from read errors.

Other advantages and features will become apparent from the following description of the preferred embodiment and from the claims.

### Description of the Preferred Embodiment

We first briefly describe the drawings.

Fig. 1 is a block diagram of a host computer and a disk storage system.

Fig. 2 is a diagrammatic top view of a portion of a magnetic disk.

Fig. 3 is a flow chart of a procedure for conditioning a read/write head.

### Structure

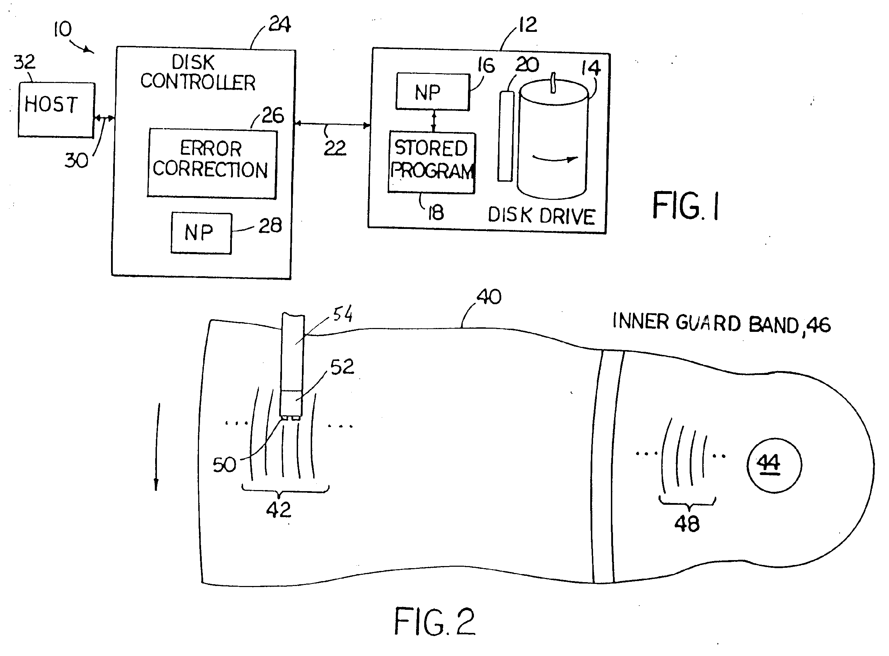

Referring to Fig. 1, in a magnetic disk storage system 10, a disk drive unit 12 includes a rotating stack 14 of magnetic disks. A microprocessor 16 (controlled by a stored program 18) regulates the operation of a read/write head assembly 20 to cause it to read and write bits on the magnetic disks in accordance with instructions provided via a link 22 from a disk controller 24. Link 22 also carries the bits back and forth between disk controller 24 and disk drive 12, and carries status information from the disk drive back to the disk controller

Disk controller 24 includes error correction circuitry 26 which implements an appropriate error correction code with respect to bits being sent to the disk drive for storage and with respect to possibly corrupted bit sequences read from the disks. A program controlled microprocessor unit 28 governs the delivery and receipt of bits, instructions, and status information via link 22 and also communicates via a link 30 with a host computer 32. Link 30 carries (i) operating system commands from host computer 32 requesting the reading or writing of data, (ii) the data itself, and (iii) status information from disk controller 24.

Referring to Fig. 2, each surface of one of the magnetic disks 40 is organized in concentric tracks 42. Near the center 44 of the disk is an inner guard band 46 that separates the outer tracks (used for customer data) from inner tracks 48 used for diagnostic and other purposes. The read/write head assembly 20 (Fig. 1) includes at least one thin-film head 50 mounted on a slider 52 which is supported on an arm 54. The slider flies above the disk with the poles of the head positioned to read or write on a desired track.

### Operation

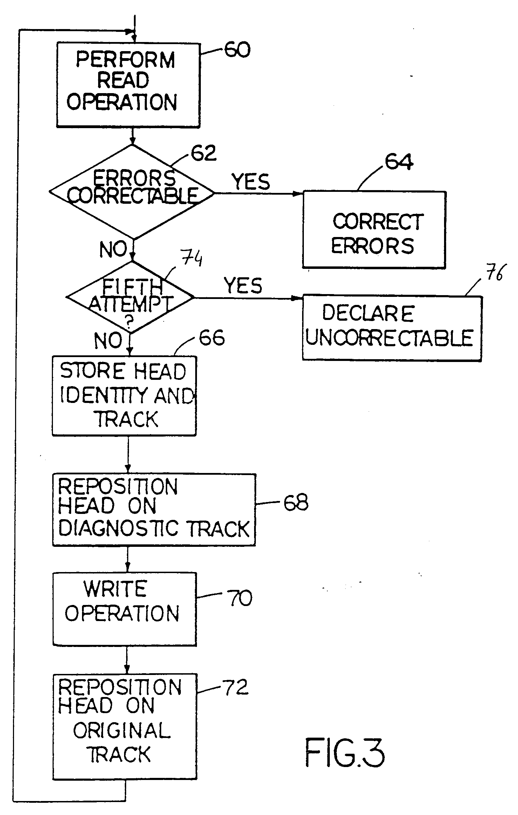

Referring to Fig. 3, when the operating system in host computer 32 asks disk controller 24 to read data in a specified block of the disk, controller 24 passes the instruction along to the disk drive 12. The head is then moved to the proper track and performs a read operation (block 60, Fig. 3) to read the information in the specified block. The information read from the disk is then returned to the disk controller. If the number of errors in the information is within the capacity of the error correction circuitry to handle (block 62), the errors are corrected (64) and the correct data is passed back to the host computer. On the other hand, if the errors are too numerous, the error correction circuitry indicates that condition to microprocessor 28. Microprocessor 28 then sends to disk drive 12 an error recovery instruction which tells the disk drive to take steps to attempt to improve the efficiency of the intended read operation.

In response to the error recovery instruction, microprocessor 16 executes a sequence of error recovery procedures, which may include, for example, adjusting the head position slightly to try to improve its centering over the track. The sequence of procedure also includes a head conditioning procedure which includes the following sequence of steps.

First, the identity of the head which failed to perform an acceptable read operation and its present track location are stored temporarily (66). Then the head is repositioned (68) over a diagnostic read/write track located inside the guard band. Next the head is caused to perform a write operation 70 on the diagnostic track. As explained above, this write operation typically results in a small change in the domain configuration (and hence the permeability of the head poles) which may be sufficient to enable the head to perform an acceptable read operation. The head is then repositioned (72) at the original track location. Once the disk drive has completed all of the error recovery procedures, it reports that fact to the disk controller, which then again causes the disk drive to attempt the same read operation (60) as before. The error correction step (62). When the errors are found to be uncorrectable for a fifth time (74), the block is declared uncorrectable (76).

## Claims

1. A method of conditioning a thin film magnetic read/write head (20) adapted for a storage medium (14) on which data is recorded, comprising the steps of:
causing said head to perform a read operation (60) on selected data on a storage medium;
determining if the read operation was performed acceptably; and
if not, causing said head to perform a write operation (70) that is capable of increasing the likelihood that the head will be able to acceptably perform the read operation, and that does not include performing an operation on data adjacent to said selected data.

2. The method of claim 1 further comprising the step of:
after the write operation (70), causing the head to perform the read operation (60) again.

3. The method of claim 1 or claim 2 adapted for a magnetic medium on which data is recorded in a manner that permits detection of errors in data read from the medium, wherein said step of determining whether said operation was performed acceptably comprises detecting (62) the existence of errors in data read from said medium.

4. The method of claim 1 adapted for a magnetic medium on which data is recorded in a data region (42) of said medium and wherein the write operation is performed in a region (48) separate from the data region.

5. The method of claim 1 wherein the sequence of steps of said method is repeated more than once.

6. A method according to claim 1 wherein the read operation (60) takes place at a given track location (42), and wherein:
a) the write operation (70) is performed on a diagnostic track (48); and further including the steps of:
b) repositioning the head at said given track location; and
c) causing the head to attempt to read data at said given location.

7. A method according to claim 6 further comprising repeating steps a), b) and c) a plurality of times, and if the read operation in step c) remains unsuccessful after a predetermined number of times, designating a block of data to be unrecoverable.

8. A method according to claim 1 wherein the read operation is subject to errors caused by a temporary defect in said head and wherein the step of determining if the read operation was performed acceptably is performed based on the presence of said errors, and wherein the write operation is capable of correcting the defect.

9. Apparatus for conditioning a thin film magnetic read/write head (20) adapted for a storage medium (14) on which data is recorded, comprising:
a controller (24) for causing said head to perform a read operation (60) on selected data on said storage medium; and
circuitry (26) for determining if the read operation was performed acceptably;
said controller (24) being connected to cause said head to perform a write operation (70) that is capable of increasing the likelihood that the head will be able to acceptably perform the read operation, and that does not include performing an operation on data adjacent to said selected data.

## Patentansprüche

1. Verfahren zur Konditionierung eines magnetischen Dünnfilm-Lese/Schreibkopfes (20), der für ein Speichermedium (14) vorgesehen ist, auf das Daten aufgezeichnet werden, enthaltend die Schritte:
Veranlassung des Kopfes, eine Leseoperation (60) ausgewählter Daten auf einem Speichermedium durchzuführen;
Bestimmung, ob die Leseoperation annehmbar durchgeführt wurde; und wenn nicht, Veranlassung des Kopfes, eine Schreiboperation (70) durchzuführen, die in der Lage ist, die Wahrscheinlichkeit zu erhöhen, daß der Kopf fähig sein wird, die Leseoperation annehmbar durchzuführen, und die nicht die Durchführung einer Operation von Daten, die den ausgewählten Daten benachbart sind, einschließt.

2. Verfahren nach Anspruch 1, das weiterhin den Schritt enthält:
nach der Schreiboperation (70), Veranlassung des Kopfes, die Leseoperation (60) nochmals durchzuführen.

3. Verfahren nach Anspruch 1 oder Anspruch 2, das für ein magnetisches Medium vorgesehen ist, auf dem Daten in einer Weise aufgezeichnet werden, die die Detektion von Fehlern beim Datenlesen vom Medium erlaubt, wobei der Schritt zur Bestimmung, ob die Operation annehmbar durchgeführt wurde, den Nachweis (62) der Existenz von Fehlern beim Datenlesen vom Medium enthält.

4. Verfahren nach Anspruch 1, das für ein magnetisches Medium vorgesehen ist, auf das Daten in einer Datenregion (42) des Mediums aufgezeichnet werden, und worin die Schreiboperation in einer Region (48), die von der Datenregion getrennt ist, durchgeführt wird.

5. Verfahren nach Anspruch 1, wobei die Schrittfolge des Verfahrens mehr als einmal wiederholt wird.

6. Verfahren gemäß Anspruch 1, wobei die Leseoperation (60) an einem gegebenen Spurort (42) stattfindet, und wobei:
a) die Schreiboperation (70) auf einer Diagnosespur (48) durchgeführt wird;
und das weiterhin die Schritte umfaßt:
b) erneutes Positionieren des Kopfes an dem gegebenen Spurort; und
c) Veranlassung des Kopfes, das Lesen von Daten am gegebenen Ort zu versuchen.

7. Verfahren gemäß Anspruch 6, das weiterhin das mehrfache Wiederholen der Schritte a), b) und c) und, wenn die Leseoperation in Schritt c) nach einer vorbestimmten Anzahl von Malen bzw. Wiederholungen erfolglos bleibt, das Festlegen eines Datenblocks als unwiederbringlich enthält.

8. Verfahren gemäß Anspruch 1, wobei die Leseoperation Fehlern unterworfen ist, die durch einen vorübergehenden Defekt im Kopf verursacht werden, und wobei der Schritt zur Bestimmung, ob die Leseoperation annehmbar durchgeführt wurde, auf dem Vorhandensein der Fehler basierend durchgeführt wird, und wobei die Schreiboperation zur Korrektur des Defekts in der Lage ist.

9. Gerät zur Konditionierung eines magnetischen Dünnfilm-Lese/Schreibkopfes (20), der für ein Speichermedium (14) vorgesehen ist, auf das Daten aufgezeichnet werden, enthaltend:
ein Steuergerät (24) zum Veranlassen des Kopfes, eine Leseoperation (60) der ausgewählten Daten auf dem Speichermedium durchzuführen; und
Schaltung (26) zur Bestimmung, ob die Leseoperation annehmbar durchgeführt wurde;
das Steuergerät (24), das angeschlossen ist, um den Kopf zur Durchführung einer Schreiboperation (70) zu veranlassen, die die Erhöhung der Wahrscheinlichkeit, daß der Kopf in der Lage sein wird, die Leseoperation annehmbar durchzuführen, ermöglicht, und die nicht die Durchführung einer Operation von Daten, die zu den ausgewählten Daten benachbart sind, einschließt.

## Revendications

1. Procédé de conditionnement d'une tête magnétique (20) de lecture/écriture à films minces adaptée pour un milieu de stockage (14) sur lequel des données sont enregistrées, comportant les étapes qui consistent :
à amener ladite tête à effectuer une opération de lecture (60) de données sélectionnées sur le milieu de stockage ;
à déterminer si l'opération de lecture a été effectuée de façon acceptable ; et
si tel n'est pas le cas, à amener ladite tête à effectuer une opération d'écriture (70) qui peut augmenter la probabilité suivant laquelle la tête peut être en mesure d'effectuer de façon acceptable l'opération de lecture et qui ne comporte pas l'exécution d'une opération sur des données adjacentes auxdites données sélectionnées.

2. Procédé selon la revendication 1, comportant en outre l'étape qui consiste :
après l'opération d'écriture (70) à amener la tête à effectuer à nouveau une opération en lecture (60).

3. Procédé selon la revendication 1 ou la revendication 2, adapté à un milieu magnétique sur lequel des données sont enregistrées de manière à permettre la détection d'erreurs dans la lecture de données à partir de ce milieu, dans lequel ladite étape qui consiste à déterminer si ladite opération a été effectuée de façon acceptable comporte la détection (62) de l'existence d'erreurs dans la lecture des données, à partir dudit milieu.

4. Procédé selon la revendication 1, adapté pour un milieu magnétique sur lequel des données sont enregistrées dans une région de données (42) dudit milieu et dans lequel l'opération d'écriture est effectuée dans une région (48) séparée de ladite région.

5. Procédé selon la revendication 1, suivant lequel la séquence des étapes dudit procédé y est répétée plus d'une fois.

6. Procédé selon la revendication 1, dans lequel l'opération de lecture (60) a lieu sur un emplacement de piste (42) donné et dans lequel :
a) l'opération d'écriture (70) est effectuée sur une piste de diagnostic (48) ; et qui comporte en outre les étapes qui consistent :
b) à repositionner la tête sur ledit emplacement de piste donné ; et
c) à amener la tête à effectuer une tentative de lecture de données dans ledit emplacement.

7. Procédé selon la revendication 6, comportant en outre la répétition, une pluralité de fois, des étapes a), b) et c), et si l'opération de lecture à l'étape c) demeure non satisfaisante après un nombre prédéterminé de fois, à désigner un bloc de données comme irrécupérable.

8. Procédé selon la revendication 1, dans lequel l'opération de lecture est soumise à des erreurs dues à un défaut temporaire dans ladite tête et dans lequel l'étape qui consiste à déterminer si l'opération de lecture a été effectuée de façon acceptable est établie sur la base de la présence desdites erreurs, et dans lequel l'opération d'écriture est en mesure de corriger le défaut.

9. Appareil de réparation d'une tête magnétique de lecture/écriture magnétique (20) à films minces adaptée pour un milieu de stockage (14) sur lequel des données sont enregistrées, comportant :
un contrôleur (24) pour amener ladite tête à effectuer une opération de lecture (60) sur des données sélectionnées sur ledit milieu de stockage ; et
des circuits (26) pour déterminer si l'opération de lecture a été effectuée de façon acceptable ;
ledit contrôleur (24) étant connecté pour amener ladite tête à effectuer une opération d'écriture (70) qui peut augmenter la probabilité suivant laquelle la tête est en mesure d'effectuer de façon acceptable l'opération de lecture et qui ne comporte pas l'exécution d'une opération sur des données adjacentes auxdites données sélectionnées.
